# EUROPÄISCHE PATENTANMELDUNG

(11) **EP 1 526 460 A2**
(43) Veröffentlichungstag der Anmeldung: **27.04.2005**
(21) Anmeldenummer: 04022124.4
(22) Anmeldetag: 17.09.2004
(51) Int. Cl.: G06F 12/14, G06F 9/46

(54) **System und Verfahren zur Überwachung und Verwaltung prozessinterner Speicher einer Prozessausführungseinheit**

(30) Priorität: 23.10.2003 DE 10349200
(71) Anmelder: DaimlerChrysler AG, 70567 Stuttgart (DE)
(72) Erfinder: Falsett, Rainer, 64832 Babenhausen (DE); Jentsch, Matthias, 37574 Einbeck (DE); Seyer, Reinhard, 63110 Rodgau (DE)

(57) **Zusammenfassung**

Es werden ein System sowie ein Verfahren zur Verwaltung und Überwachung prozessinterner Speicher einer Prozessausführungseinheit bzw. Programmeinheit mit einem globalen Stack-Speicherbereich (1) zum Ausführen von Prozessen und Unterprozessen eines Programmablaufs mit verschiedenen Unterprogrammen vorgeschlagen, mit einer Überwachungseinheit (2) zum Schutz und zur Überwachung des Adressraums des Stack-Speicherbereichs (1) zwischen einer festen Grenze (oG) und einer variablen logischen Grenze (uG), wobei die Überwachungseinheit (2) einen separaten, internen Stack (3) oder Überwachungs-Stack aufweist, der angepasst ist zum Speichern einer variablen logischen Grenze (uG) des globalen Stacks (1) auf jeder Ebene einer Verschachtelung des Programmablaufs beim Wechsel zwischen verschiedenen Prozessen.

## Beschreibung

Die Erfindung betrifft ein System und ein Verfahren zur Verwaltung und Überwachung prozessinterner Speicher einer Prozessausführungseinheit gemäß den Merkmalen des Oberbegriffs des Anspruchs 1 und gemäß den Verfahrensschritten gemäß dem Oberbegriff des Anspruchs 6.

Die Erfindung betrifft insbesondere das Verwalten und Überwachen von Speicherbereichen, welche hauptsächlich zum Ausführen von Unterprogrammen innerhalb eines Programmablaufs vorgesehen sind. Unter Unterprogramm werden im folgenden alle Arten von Unterprozessen verstanden, die in einem Programmablauf vorkommen können. Insbesondere werden unter Unterprogrammen auch Funktionen und Prozeduren verstanden wie sie z.B. in der Programmiersprache PASCAL bereits implementiert sind oder vereinbart werden können. Bei einem Task-Wechsel können zusätzlich Variable mit Hilfe dieses Speicherbereichs übergeben werden. Solche Speicher werden herkömmlich als Stack-Speicherbereich oder einfach "Stack" bezeichnet und dienen zum Speichern der Rücksprungadressen von Unterprogrammen. Auf dem Stack können außerdem dynamische Variablen zur Übergabe zwischen Programmen und Unterprogrammen abgelegt werden. Derartige Stack-Speicherbereiche weisen eine festgelegte Speichergröße auf zwischen einer logischen oberen Grenze und einer logischen unteren Grenze. Stack-Speicher funktionieren nach dem LIFO-Prinzip (Last in, first out), das heißt, dass die zuletzt gespeicherten Daten als erstes wieder herausgelesen werden. Dieser Vorgang wird durch einen sogenannten Pointer organisiert, der eine Adresse darstellt und in einem speziell dafür vorgesehenem Register abgelegt wird. Er wird in der Regel als Stackpointer bezeichnet. Die vorliegende Erfindung betrifft insbesondere einen globalen, prozessorinternen Stack, welcher als gemeinsamer Speicherbereich für alle Programmteile einer Programmverarbeitungseinheit dient. Die Sprungsadresse und der Datenaustausch einzelner Programmabschnitte, Prozesse und Unterprogramme werden über den gemeinsamen Stack abgewickelt. Wird ein neuer Prozess aufgerufen, dann wird die Ausführung des gerade aktiven Prozesses unterbrochen, und die Informationen zum Zustand der Funktion und der Programmverarbeitungseinheit, wie die aktuellen Adresswerte bzw. Registerwerte, werden auf dem Stack gespeichert. Wenn der neue Prozess beendet ist, kann durch die im Stack gespeicherten Daten zu dem vorherigen Prozess zurückgekehrt und der alte Zustand wieder hergestellt werden.

Ein Problem besteht dahingehend, dass es aufgrund von fehlerhaften Zugriffen auf den Stack zu Fehlern kommen kann, wenn beispielsweise einzelne Programmabschnitte in dem verwendeten Stack-Bereich vor einer fälschlichen Verwendung durch andere Programmteile nicht geschützt sind. Neben fehlerhaften Zugriffen auf im Stack gespeicherte Daten kann es auch zu Fehlern kommen, wenn der Speicherbereich des Stacks nicht ausreichend groß ist und seine obere Grenze oder seine untere Grenze verletzt werden. Die Größe des Stacks wird in der Regel vom Programmentwickler durch einen festgelegten Adressraum zum Übersetzungszeitpunkt des Programms definiert. Es ist bekannt, den Adressraum oder Speicherbereich des Stacks durch eine Überwachung der so festgelegten unteren und oberen Grenze zu sichern. Diese Überwachung der Grenzen erfolgt beispielsweise mittels einer Betriebssystemfunktion oder durch prozessorinterne Hardwareregister.

Es ist auch bekannt, die Überwachung der vorgegebenen Grenzen eines Stacks durch einen Vergleich von aktuellen Stack-Adressen mit den Werten von zwei speziell hierfür vorgesehenen Registern ständig zu überwachen. In der US 4,376,297 ist ein derartiges Stack-Verwaltungssystem beschrieben. Diese Überwachung der Grenzen eines Stack-Speicherbereichs greift jedoch nicht im Falle eines direkten, fehlerhaften Zugriffs innerhalb der Grenzen, zum Beispiel aufgrund von Sicherungsbefehlen von Registern, meist "Push"- und "Pop"-Befehle genannt, welche sich in ihrer Anzahl nicht entsprechen. Die bekannte Art der Überwachung des Speicherbereichs von Stack-Speichern schützt auch nicht vor Verletzungen oder Überschreibungen von für das Funktionieren wesentlichen Datenbereichen innerhalb der Grenzen des Stack-Adressraums.

Ein Problem der bisher bekannten Lösungen für eine Verwaltung von Stack-Speicherbereichen ist, dass bei verschachtelten Prozessen nicht sichergestellt ist, dass die auf dem Stack verbliebenen Daten und Rücksprungadressen des vorherigen Prozesses vor Aktivitäten des sie verdrängenden Prozesses geschützt sind. Da in dem Stack auch die Rücksprungadressen der verschachtelten Prozesse gespeichert sind, hat dies im Fall, dass sie zerstört werden, fatale Folgen für die Funktionsfähigkeit des kompletten Systems. Das System gerät in einen nicht vorhersehbaren Zustand und kann vollständig zusammenbrechen. Ein anderes Problem bei bekannten Systemen zur Verwaltung und Überwachung von Stacks ist, dass bei einer Verschachtelung von Prozessen aufgrund von Fehlern der gerade beendete Prozess noch Daten auf dem Stack hinterlassen haben kann, die eigentlich vor seinem Beenden wieder entfernt hätten werden müssen. Der nachfolgende Prozess wird diese Daten gegebenenfalls als seine eigenen, vor dem Verdrängen dort abgelegten Daten, betrachten und somit fehlerhaft aufgrund falscher Daten weiterarbeiten.

Demgegenüber ist es die Aufgabe der vorliegenden Erfindung, ein System sowie ein Verfahren zur Verwaltung und Überwachung prozessinterner Speicher einer Prozessausführungseinheit mit einem globalen Stack-Speicherbereich bereitzustellen, mit welchen ein differenzierter und in jeder Situation effektiver Schutz von Speicherbereichen zwischen einzelnen Prozessen oder Unterprogrammen gewährleistet ist.

Diese Aufgabe wird durch ein System mit den Merkmalen des Anspruchs 1 sowie durch das erfindungsgemäße Verfahren mit den Schritten gemäß Anspruch 6 gelöst. Vorteilhafte Ausgestaltungen und Weiterbildungen sind Gegenstand der jeweiligen abhängigen Ansprüche.

Das erfindungsgemäße System zur Verwaltung und Überwachung prozessinterner Speicher einer Prozessausführungseinheit mit einem globalen Stack-Speicherbereich zum Ausführen eines Programmablaufs mit Programmen, Unterprogrammen und Unterprozessen weist eine Überwachungseinheit zum Schutz des Adressraums des Stack-Speicherbereichs zwischen einer oberen und einer unteren Grenze auf. Das Überwachungs- und Verwaltungssystem gemäß der Erfindung ist dadurch gekennzeichnet, dass die Überwachungseinheit einen separaten, internen Stack oder Überwachungsregister aufweist, der oder das angepasst ist zum Speichern einer variablen logischen Grenze des globalen Stack-Speicherbereichs auf jeder Ebene einer Verschachtelung des Programmablaufs beim Wechsel zwischen verschiedenen Prozessen oder Funktionen.

Die Überwachung der Außengrenzen des Stacks beruht auf dem erfindungsgemäßen Konzept einer Überwachung mit einer variablen logischen Grenze. Diese logische variable Grenze kann hierbei in Bezug auf die feststehenden logischen unteren und oberen Grenzen des globalen Stacks sowohl in der oberen Grenze als auch in der unteren Grenze variabel ausgebildet sein. Im folgenden wird jeweils ohne Beschränkung der Allgemeinheit auf eine Ausführungsform bezug genommen, bei der die untere Grenze als variable Grenze ausgebildet ist.

Die variable logische Grenze des globalen Stack-Speicherbereichs wird entsprechend dem jeweiligen Prozess oder der Funktion angepasst, das heißt hochgesetzt, und über die Verschachtelung von verschiedenen Prozessen oder Unterprogrammen mitgeführt. Dem jeweiligen Prozess steht daher in jedem Fall nur der Speicherbereich des globalen Stacks zur Verfügung, der sich zwischen dieser variablen logischen Grenze und der als Außengrenze festgelegten Adresse des Gesamtbereichs des Stacks befindet. Auf jeder Programmebene der Unterprogramme und -prozesse wird jeweils die variable logische Grenze des Stack-Speicherbereichs des globalen Stacks neu festgelegt und auf einem internen, separaten Überwachungsspeicher oder Stack gespeichert. Die Speicherung der variablen logischen Grenze ermöglicht es, die restlichen Speicherbereiche und Daten des zuvorigen Prozesses innerhalb dieser neuen Grenze vor einem Überschreiben oder fehlerhaften Lesen zu schützen. Durch Speichern der jeweiligen unteren logischen Grenze für verschiedene Prozesse auf verschiedenen Ebenen eines Programmablaufs kann jederzeit auf den zuvorigen Prozess zurückgegriffen werden. Hierzu muss lediglich auf den internen Stack zurückgegriffen werden, auf welchem die jeweiligen Untergrenzen bzw. ihre Adressen abgelegt sind. Die geschützten Daten können für eine Wiederaufnahme des Verfahrens an dem gesicherten Punkt im Programmablauf herangezogen werden. Das erfindungsgemäße System sorgt dafür, dass allen anderen Prozessen - außer dem aktuellen Prozess - der Zugriff auf Speicherbereiche zwischen der variablen logischen unteren Grenze und der festgelegten oberen Grenze nicht erlaubt wird. Auf diese Weise kann im gesamten Programmablauf der Programmverarbeitungseinheit sichergestellt werden, dass Prozesse oder Funktionen, die in der Verschachtelung tiefer liegen, ihre eigene Rücksprungadresse nicht zerstören oder Daten oder Rücksprungadressen von höherliegenden Prozessen negativ beeinflussen. Erfindungsgemäß wird so ein differenzierter Speicherschutz bereitgestellt, welcher eine effizientere und gegen jedwede Störung gesicherte Verwaltung und Überwachung von Stack-Speicherbereichen ermöglicht.

Nach einer vorteilhaften Ausgestaltung der Erfindung ist die jeweils aktuelle logische untere Grenze des globalen Stack-Speicherbereichs mittels der Überwachungseinheit bei einem Wechsel zu einem neuen Prozess in dem internen Stack speicherbar und bei einer Rückkehr zu dem zuvorigen Prozess wieder aufrufbar. Auf diese Weise wird die jeweilige untere logische Grenze, die je nach Prozess verschieden sein kann, im internen Stack jeweils gespeichert und bei einem Weitergehen zu einem nächsten Prozess immer weiter nach unten verschoben. Auf diese Weise kann auch bei sehr verschachtelten Programmstrukturen ein Rücksprung auf vorherige Prozesse sicher erfolgen, ohne dass fehlerhafte Daten oder falsche Daten gelesen werden bzw. die für einen Rücksprung notwendigen Informationen verloren gehen.

Nach einer weiteren vorteilhaften Ausgestaltung der Erfindung weist die Überwachungseinheit Mittel zum Schutz von Daten unterhalb der jeweils aktuellen unteren logischen Grenze des globalen Stacks auf. Der mit Daten des zuvorigen Prozesses versehene Speicherbereich des globalen Stacks kann daher nicht gelesen und/oder überschrieben werden. Die Daten stehen erst bei einem Rücksprung auf diesen Prozess wieder zur Verfügung. Der aktuelle Prozess kann lediglich Daten innerhalb seiner neu festgelegten unteren Grenze und der über den gesamten Programmablauf festen oberen Grenze lesen und speichern. Die Mittel zum Schutz der Daten können als Hardware realisiert sein.

Die Überwachungsmittel bestehen aus einer Vergleicherschaltung, die den aktuellen Wert des Stackpointers mit den im internen Stack abgelegten variablen logischen Grenzen vergleicht. Liegt die Adresse des Stackpointers innerhalb des durch die Bereichsgrenzen abgesteckten Speicherbereichs, so ist der Ablauf des Prozesses soweit in Ordnung. Liegt die aktuelle Adresse des Stackpointers außerhalb der abgesteckten Bereichsgrenzen, so wird der aktuelle Prozess abgebrochen und es kann zum vorherigen Prozess zurückgekehrt werden, oder es kann eine Sonderfunktion ausgelöst werden.

Nach einer weiteren vorteilhaften Ausgestaltung der Erfindung ist eine Rücksprungeinrichtung vorgesehen zum Zurückkehren von einem aktuellen Prozess auf den jeweiligen zuvorigen Prozess unter Verwenden der in dem internen Stack gespeicherten variablen logischen Grenze und der jeweiligen geschützten Daten des zuvorigen Prozesses. Als sichere Rücksprungsadresse bzw. als sicherer Betriebspunkt, an dem ein Prozess wieder aufgenommen werden kann, dient hierbei insbesondere die Rücksprungadresse des aufrufenden Programms. Auch bei sehr verschachtelten Programmabläufen mit einer Vielzahl von Unterprogrammen und Unterprozessen wird auf diese Weise immer ein stabiler Ausgangspunkt für eine Wiederaufnahme des Programms an einen vorherigen Prozessschritt gewährleistet. Die entsprechenden Informationen, Daten und Adresswerte sind sicher gespeichert, da in dem internen Stack die jeweiligen unteren logischen Grenzen des globalen Stacks variabel abgespeichert und überwacht werden können.

Nach einer weiteren vorteilhaften Ausgestaltung der Erfindung ist eine Zeitüberwachungseinheit vorgesehen, die mit der Rücksprungeinrichtung gekoppelt ist, um bei Auftreten eines schwerwiegenden Fehlers in einem Prozess eines Programms oder Unterprogramms nach Ablauf einer festgelegten Dauer einen Abbruch und Rücksprung auf die im internen Stack gespeicherte Rücksprungadresse und Daten des zuvorigen Prozesses zu ermöglichen. Tritt in einem Prozess eines Unterprogramms beispielsweise ein schwerwiegender Fehler ein, so kann mit der Zeitüberwachungseinheit der Abbruch nach einem vorgegebenen Zeitraum eingeleitet werden und der Programmablauf an der gespeicherten und geschützten Rücksprungadresse des zuvorigen Prozesses seinen ordnungsgemäßen Ablauf wieder aufnehmen. Die prozessinternen bzw. prozesseigenen Speicherbereiche auf dem Stack-Speicher sind geschützt, und es besteht die vorteilhafte Möglichkeit, einen fehlerhaften Verlauf eines Unterprogramms zu erkennen, es abzubrechen und danach an einem sicheren Punkt den Programmablauf wieder fortzusetzen. Die Betriebssicherheit von Programmabläufen wird mit dem erfindungsgemäßen System zur Verwaltung und Überwachung von Stack-Speicherbereichen stark erhöht.

Das erfindungsgemäße Verfahren zur Verwaltung und Überwachung prozessinterner Speicher einer Prozessausführungseinheit mit den Merkmalen des Anspruchs 6 besteht im Speichern von Daten einer Prozessausführung von Programm- und Unterprogrammen in einem globalen Stack-Speicherbereich, wobei der Adressraum bzw. Speicherbereich des Stacks zur Einhaltung einer oberen Grenze und einer unteren Grenze überwacht wird. Erfindungsgemäß wird beim Wechsel zu einem neuen Prozess innerhalb des Programms oder zu einem anderen Unterprogramm die jeweils aktuelle variable logische Grenze des globalen Stacks in einem internen, separaten Stack gespeichert und über den folgenden Programmablauf mitgeführt. Es können auch hier sowohl die obere Grenze als auch die untere Grenze als variable logische Grenze ausgebildet sein. Im folgenden wird ohne Beschränkung der Allgemeinheit jeweils Bezug genommen auf ein Ausführungsbeispiel, bei dem die untere Grenze variabel ausgebildet ist. Die Daten des zuvorigen Prozesses unterhalb der jeweils neuen logischen unteren Grenze des neuen Prozesses werden geschützt vor einem Lesen und/oder Überschreiben. Auf diese Weise wird eine Art variabler Stack-Speicherbereich in dem Sinne bereitgestellt, dass die untere logische Grenze des Stacks veränderbar und über den gesamten Programmablauf überwachbar ist. Ein Fehler im Programmablauf aufgrund eines fehlerhaften Zugriffs auch innerhalb der Grenzen des globalen Stack-Bereichs wird so effektiv vermieden. Der jeweils aktuelle Prozess kann nur auf den für ihn definierten Bereich des Stacks mit der neuen unteren Grenze zugreifen und Daten speichern bzw. auslesen. Die Überwachung des Stack-Speicherbereichs ist somit auf jeder Programmebene sichergestellt, ohne dass fehlerhafte Zugriffe aufgrund der Verletzung der Grenzen des Stack-Bereichs oder aufgrund von andersartigen Programmfehlern zu einem vollständigen Abbruch des Programms führen. Der Programmablauf wird an den zurückliegenden Prozessen oder Funktionen einfach wieder aufgenommen mit Hilfe der jeweils gespeicherten unteren logischen Grenze und den Daten dieses Prozesses.

Nach einer weiteren vorteilhaften Ausgestaltung der Erfindung werden die jeweils zuvorigen unteren logischen Grenzen eines Prozesses für den aktuellen Prozess als Rücksprungadresse in dem globalen Stack bei Auftreten eines Programmfehlers verwendet. Die Wiederaufnahme des Programms an einer stabilen Stelle ist so sichergestellt. Der interne Stack, der der Überwachung und Verwaltung für die jeweiligen variablen logischen Grenzen dient, arbeitet ebenso wie der globale Stack nach dem LIFO-Prinzip, das heißt, die letzte gespeicherte untere logische Grenze des zuvorigen Prozesses wird jeweils wieder als erstes hergenommen bei einer Notwendigkeit eines Rücksprungs, im Falle dass ein aktueller Prozess abgebrochen werden muss. Auf diese Weise kann mit dem erfindungsgemäßen Verfahren nicht nur der stabile Verlauf eines Programms sichergestellt werden, sondern es können auch Probleme beim Abarbeiten von Unterprogrammen und Prozessen erkannt und entsprechend automatisch behandelt werden.

Nach einer weiteren vorteilhaften Ausgestaltung der Erfindung wird eine jeweils neue untere logische Grenze des globalen Stacks für einen neuen Prozess festgelegt, und der Speicherbereich unterhalb der neuen Grenze wird vor einem Lesen und Überschreiben durch den neuen Prozess geschützt. Der jeweilige aktuelle Prozess kann auf diese Weise nur auf den für ihn neu definierten Speicherbereich des globalen Stacks zurückgreifen, das heißt innerhalb der im gesamten Programmablauf festgelegten oberen Grenze und der sich variabel verändernden unteren Grenze, je nach Prozess oder Funktion. Beim Rücksprung sind die Daten des zuvorigen Prozesses außerhalb dieser neu definierten Grenzen für den aktuellen Prozess daher nicht verloren. Sie können vorteilhafterweise für ein Fortsetzen und Wiederaufnehmen des Programms verwendet werden.

Nach einer weiteren vorteilhaften Ausgestaltung der Erfindung wird ein aktueller Prozess nach einer bestimmten Zeitdauer abgebrochen und zu dem zuvorigen Prozess mittels der in dem internen Überwachungs-Stack gespeicherten Daten und jeweiligen unteren logischen Grenze des zuvorigen Prozesses zurückgekehrt und anschließend der Programmablauf mit diesem Prozess fortgesetzt. Die festgelegte Zeitdauer, nach der eine Rückkehr zu einem zuvorigen Prozess erfolgt, kann variabel eingestellt werden. Auf diese Weise wird bei Auftreten eines schwerwiegenden Fehlers innerhalb einer Prozess-Abarbeitung vermieden, dass, auch wenn dieser Fehler nicht direkt von der Überwachungseinheit erkannt wird, dennoch auf den zuvorigen Prozess zurückgesprungen wird, von welchem aus der Programmablauf wieder stabil fortgesetzt werden kann. Das erfindungsgemäße Verfahren ermöglicht eine differenzierte Überwachung und Schutz von Stack-Speichern von Datenverarbeitungsvorrichtungen. Der differenziertere Speicherschutz führt zu einer höheren Stabilität von Prozessabläufen. Einzelne Unterprogramme und Prozesse der Unterprogramme können in beliebigen verschachtelten Programmebenen ausgeführt werden, ohne dass das System bei Auftreten von Fehlern in diesen Programmebenen vollständig zusammenbricht.

Weitere Vorteile und Merkmale der Erfindung sind der nachfolgenden detaillierten Beschreibung zu entnehmen, in welcher die Erfindung mehr im Detail in Bezug auf das in der beigefügten Zeichnung dargestellte Ausführungsbeispiel beschrieben wird.

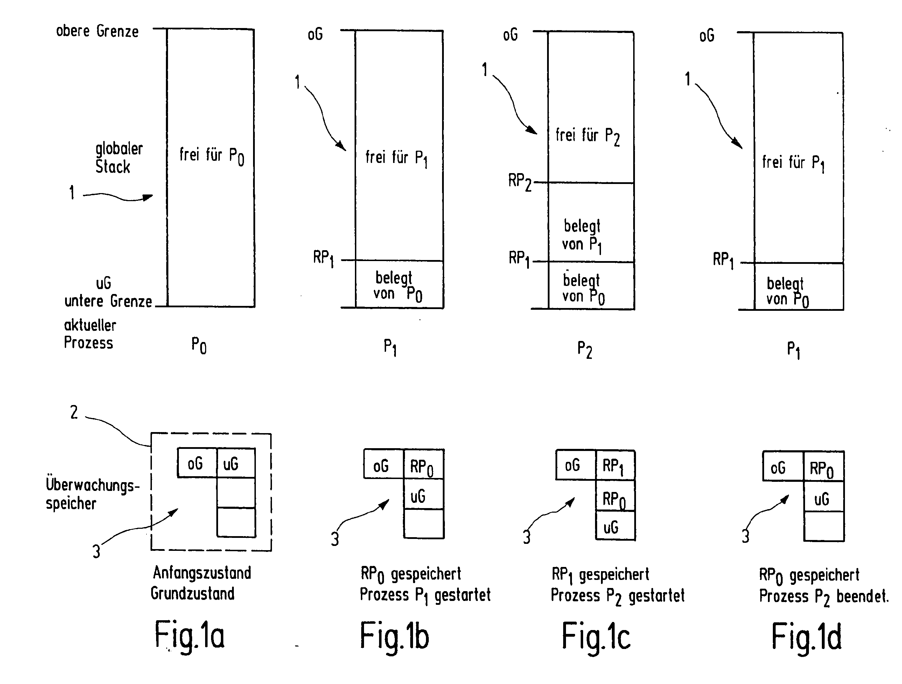

Fig. 1a, 1b, 1c und 1d zeigen jeweilige Zustände beim Wechsel zwischen einer Mehrzahl von Prozessen eines Programmablaufs mit schematischer Darstellung der Speicherbereiche und gespeicherter Variablen eines globalen Stacks und eines Überwachungs-Stacks gemäß einem Ausführungsbeispiel der vorliegenden Erfindung.

In Fig. 1a ist schematisch der Grundzustand des erfindungsgemäßen Systems zur Überwachung und Verwaltung eines globalen Stacks dargestellt. Der globale Stack 1 weist eine vom Programmierer festgelegte obere Grenze oG und eine untere Grenze uG mit jeweiligen Adressen auf, welche einen freien Speicherbereich zwischen sich definieren für den aktuellen Prozess P₀. Erfindungsgemäß ist neben dem globalen Stack 1 ein interner, separater Stack 3 in einer Überwachungseinheit 2 vorgesehen. Der interne Stack 3 oder Überwachungs-Stack speichert im Anfangszustand die jeweilige obere Grenze oG und untere Grenze uG des globalen Stacks 1. Wenn der aktuelle Prozess P₀ unterbrochen ist und zu dem nächsten Prozess, zum Beispiel einem Unterprogramm, übergegangen wird, startet der Prozess P₁ (vgl. Fig. 1b). Bei diesem Wechsel von Prozess P₀ zu P₁ wird der aktuelle Stack-Pointer oder die aktuelle untere Grenze RP₀ auf einem internen Stack-Speicher der Überwachungseinheit abgelegt und gespeichert. Die Daten werden für den Wechsel zurück zu dem Prozess P₀ benötigt. Die aktuelle untere logische Grenze RP₀ verdrängt den Wert uG in dem Überwachungs-Stack 3, welcher eine Stelle tiefer gesetzt wird und auch weiterhin gespeichert wird. Die Überwachung des Speicherbereichs des globalen Stacks 1 wird mit dieser neuen logischen Untergrenze RP₀ fortgesetzt. Der Wert RP₀ ist somit für den Prozess P₁ die neue, erlaubte logische Untergrenze. Als obere Grenze oG des globalen Stacks 1 bleibt weiterhin auch für den laufenden Prozess P₁ der zuvorige Werte von oG beibehalten. Als obere Grenze oG bleibt in allen Fällen unabhängig von dem gerade laufenden Prozess der festgelegte Wert bzw. die festgelegte Adresse erhalten. Der aktuell laufende Prozess P₁ kann die Daten und die Rücksprungadresse von dem zuvorigen Prozess P₀ nicht mehr von dem globalen Stack 1 lesen. Zudem kann der aktuelle Prozess P₁ die Daten in diesem Zustand (Fig. 1b) nicht überschreiben, da er beispielsweise von der Hardware-Einheit daran gehindert wird, diese zu überschreiben. Die Daten des vorherigen Prozesses P₀ sind somit auf dem globalen Stack 1 sicher geschützt.

Der gleiche Vorgang wiederholt sich, wenn von dem aktuellen Prozess P₁ (Fig. 1b) auf den Prozess P₂ übergegangen wird (Fig. 1c), wobei Letzterer den aktuellen Prozess P₁ verdrängt. Auch hier wird wieder in dem Überwachungs-Stack 3 der Überwachungseinheit 2 die aktuelle untere logische Grenze RP₁ gespeichert, und sie verdrängt die zuvorige Grenze oder den Stack-Pointer RP₀, der auf die nächste Stelle nach unten verschoben wird. Dem jeweils aktuellen Prozess, in diesem Fall P₂, steht der globale Stack 1 oberhalb der neu festgelegten unteren logischen Grenze voll zur Verfügung. Er kann jedoch nicht auf den geschützten unteren Bereich, unterhalb dieser logischen Grenze, zurückgreifen. Die jeweilige untere logische Grenze wird von jedem neuen Unterprogramm-Prozess P₁, P₂ jeweils neu festgelegt. Wird nun der Prozess P₂ beendet, so werden die alten Grenzen für den globalen Stack 1 wieder vom internen Stack 3, auf welchem sie gespeichert sind, zurückgesetzt (vgl. Fig. 1d). Bei einem Rücksprung auf einen zuvorigen Prozess, zum Beispiel bei Auftreten eines Fehlers im aktuellen Prozessablauf, wird der jeweils zuletzt gespeicherte untere logische Grenzwert aus dem internen Stack 3 wieder hervorgeholt und im globalen Stack 1 als untere Grenze festgelegt (LIFO-Prinzip). Die Speicherbereiche sind somit spezifisch auf jeweilige Unterprozesse angepasst und ermöglichen ein flexibles Anpassen und Mitverfolgen der unteren Grenze und Speicherung von für einen Rücksprung wesentlichen Datenbereichen auf allen Ebenen eines Programmablaufs.

Der Vorteil der erfindungsgemäßen Lösung besteht zusammengefasst einerseits im effektiven Schutz von prozesseigenen Stack-Bereichen eines internen Speichers und in der Möglichkeit, den fehlerhaften Verlauf eines Unterprogramms jederzeit zu erkennen, es abbrechen zu können und danach von einem sicheren Punkt aus den weiteren Ablauf eines Programms fortsetzen zu können.

Sämtliche in der Beschreibung, den nachfolgenden Ansprüchen sowie in der Zeichnung dargestellten Merkmale und Elemente können sowohl einzeln als auch in beliebiger Kombination miteinander verwirklicht sein.

## Patentansprüche

1. System zur Verwaltung und Überwachung prozessinterner Speicher einer Prozessausführungseinheit mit einem globalen Stack-Speicherbereich (1) zum Ausführen von Prozessen und Unterprozessen eines Programmablaufs mit verschiedenen Unterprogrammen, mit einer Überwachungseinheit (2) zum Schutz und zur Überwachung des Adressraumes des Stack-Speicherbereichs (1) zwischen einer oberen Grenze (oG) und einer unteren Grenze (uG),
**dadurch gekennzeichnet,**
**dass** die Überwachungseinheit (2) einen separaten, internen Stack (3) aufweist, der angepasst ist zum Speichern einer variablen logischen Grenze (uG) des globalen Stack-Speicherbereichs (1) auf jeder Ebene einer Verschachtelung des Programmablaufs beim Wechsel zwischen verschiedenen Prozessen.

2. System nach Anspruch 1,
**dadurch gekennzeichnet,**
**dass** mittels der Überwachungseinheit (2) bei einem Wechsel zu einem neuen Prozess (P₁) die jeweils aktuelle untere logische Grenze (uG, RP₀, RP₁) des globalen Stacks (1) in dem internen Stack (3) speicherbar und bei einer Rückkehr zu dem zuvorigen Prozess (P₀) wiederaufrufbar ist.

3. System nach Anspruch 1 oder 2,
**dadurch gekennzeichnet,**
**dass** die Überwachungseinheit (2) Mittel zum Schutz von Daten unterhalb der jeweiligen aktuellen unteren logischen Grenze des globalen Stacks (1) aufweist.

4. System nach einem der vorherigen Ansprüche,
**dadurch gekennzeichnet,**
**dass** eine Rücksprungeinrichtung vorgesehen ist zum Rücksprung von einem aktuellen Prozess (P₁) auf den jeweils zuvorigen Prozess (P₀) unter Verwenden der in dem internen Stack (3) gespeicherten unteren logischen Grenze (uG) als Rücksprungadresse und der geschützten Daten des zuvorigen Prozesses (Po).

5. System nach einem der vorherigen Ansprüche,
**dadurch gekennzeichnet,**
**dass** eine Zeitüberwachungseinheit vorgesehen ist, die mit der Rücksprungeinrichtung gekoppelt ist, um bei Auftreten eines schwerwiegenden Fehlers in einem Prozess eines Unterprogramms nach Ablauf einer festgelegten Dauer einen Abbruch und Rücksprung auf die im internen Stack (3) gespeicherte Rücksprungadresse und Daten des zuvorigen Prozesses zu ermöglichen.

6. Verfahren zur Verwaltung und Überwachung prozessinterner Speicher einer Prozessausführungseinheit, wobei in einem globalen Stack-Speicherbereich (1) Daten einer Prozessausführung von Programm- und Unterprogramm-Prozessen gespeichert werden, wobei der Adressraum des Stacks (1) zur Einhaltung einer festen Grenze (oG) und einer variablen logischen Grenze (uG) überwacht wird,
**dadurch gekennzeichnet,**
**dass** beim Wechsel zu einem neuen Prozess innerhalb des Programms die jeweils aktuelle Grenze (uG, RP₀, RP₁) des globalen Stacks (1) als variable logische Grenze in einem internen, separaten Stack (3) gespeichert und mitgeführt wird und die Daten des zuvorigen Prozesses jenseits der jeweils neuen variablen logischen Grenze des neuen, aktuellen Prozesses geschützt werden.

7. Verfahren nach Anspruch 6,
**gekennzeichnet durch** Verwenden der jeweils zuvorigen variablen logischen Grenze eines Prozesses als Rücksprungadresse in dem globalen Stack bei Auftreten eines Programmfehlers in dem aktuellen Prozess.

8. Verfahren nach Anspruch 6 oder 7,
**gekennzeichnet durch** Festlegen einer jeweils neuen unteren logischen Grenze (RP₁) des globalen Stacks (1) eines aktuellen Prozesses innerhalb der zuvorigen Grenzen (uG, oG) des zuvorigen Prozesses (P₀) und **durch** Schützen des Speicherbereichs des globalen Stacks (1) unterhalb der neuen unteren logischen Grenze (RP₁) vor einem Lesen und Überschreiben **durch** den neuen Prozess (P₁).

9. Verfahren nach einem der Ansprüche 6 bis 8, **gekennzeichnet durch** Abbrechen eines aktuellen Prozesses (P₁) nach einer bestimmten Zeitdauer und **durch** Rückkehren zu dem zuvorigen Prozess (P₀) mittels der gespeicherten Daten und der unteren logischen Grenze (uG) im internen Stack (3) und **durch** anschließendes Fortsetzen des Programmablaufs mit diesem Prozess (P₀) .
